# EUROPEAN PATENT APPLICATION

(11) **EP 3 031 622 A1**
(43) Date of publication of application: **15.06.2016**
(21) Application number: 15197137.1
(22) Date of filing: 30.11.2015
(51) Int. Cl.: B60C 9/00, B60C 11/24, B60C 9/18, B60C 9/26

(54) **TIRE HAVING WEAR INDICATOR**

(30) Priority: 08.12.2014 US 201414562863
(71) Applicant: The Goodyear Tire & Rubber Company, Akron, Ohio 44316 (US)
(72) Inventor: KNAVISH, Maure Ellen, Hartville, OH Ohio 44632 (US); ARNOLD, John Eric, North Canton, OH Ohio 44720 (US); BOEHLEFELD, Robert John, Brecksville, OH Ohio 44141 (US)
(74) Representative: Kutsch, Bernd

(57) **Abstract**

A pneumatic tire comprising a tread (25), a belt structure (40, 50, 60, 70, 80) and a carcass (31) is disclosed. The belt structure comprises a zigzag belt structure (60) and a contrasting colored wear indicator structure (50) located either radially inward of the zigzag belt structure (60) or radially outward of the zigzag belt structure (60) and between the zigzag belt structure (60) and a belt layer (80).

## Description

### Field of the Invention

The present invention is directed to a tire. More specifically, the present invention is directed to a tire having a wear indicator strip and a method of manufacturing a tire having a wear indicator strip built into the tire.

### Background of the Invention

The use of treadwear indicators is common and the use of treadwear indicators is mandated by law in many countries. A variety of such indicators are known. One type employs colored means, such as different colored rubber layers incorporated into the tread or colored fibers in layers located below the tread for a visual indicator of wear. Other types use tie-bar type elements in the tread grooves. When required by law, the upper surface of the tread wear indicator must be located at a height of 1.6 mm from the base of the groove in which the wear indicator is located.

The practical problem with the colored indicators of the type mentioned is that there is no way for the operator to determine the level of wear until the tire is worn and the buried colored rubber layer or colored fiber is finally exposed. When the tire employs the tie-bar type wear indicator, since the wear indicator is the same color as the remaining part of the tread, it can be difficult to determine the level of wear.

### Summary of the Invention

The invention relates to a tire in accordance with claim 1.

Dependent claims refer to preferred embodiments of the invention.

In a preferred aspect, the present invention is directed to a tire having located within the tread structure, a visual tread wear indicator that provides a visual means of indicating the state of wear for the full tread depth. The invention provides in a first aspect a pneumatic tire comprising a tread, a belt structure, and a carcass, the belt structure comprising: at least one zigzag belt structure, and a contrasting colored wear indicator located radially inward of the zigzag belt structure.

### Brief Description the Drawings

The invention will be described by way of example and with reference to the accompanying drawings in which:
FIG. 1 is a cut perspective view of a tire illustrating the tread wear indicator.
FIG. 2 is a partial cutaway top view of the tire of Fig. 1 showing the wear indicator layer and the zigzag belt reinforcing structure.
FIG. 3 is a perspective view of a zigzag belt reinforcing structure being formed on a tire building drum.
FIG. 4 is a perspective view of the rubberized strip used to form the zigzag belt structure.

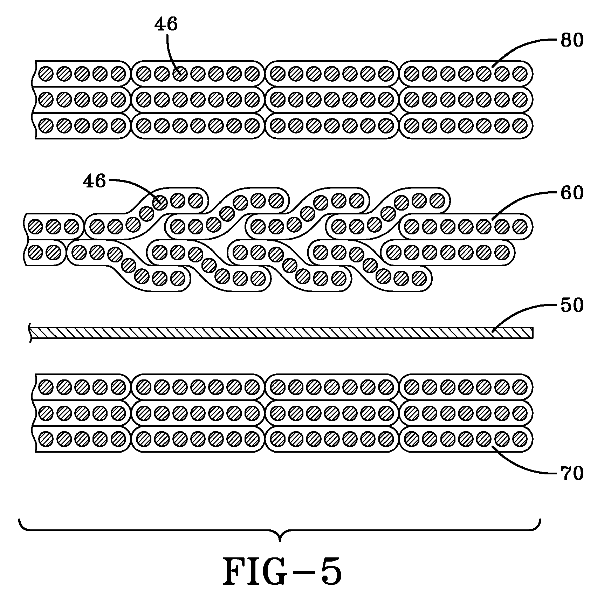

FIG. 5 is a section view of a preferred embodiment of a belt package.

### Definitions

"Carcass" means the tire structure apart from the belt structure, tread, undertread, and sidewall rubber over the plies, but including the beads.

"Circumferential" means lines or directions extending along the perimeter of the surface of the annular tread perpendicular to the axial direction.

"Equatorial plane (EP)" means the plane perpendicular to the tire's axis of rotation and passing through the center of its tread.

"Radial" and "radially" mean directions radially toward or away from the axis of rotation of the tire.

"Radial-ply tire" or "radial tire" means a belted or circumferentially-restricted pneumatic tire in which the ply cords which extend from bead to bead are laid at cord angles between 65° and 90° with respect to the equatorial plane of the tire.

"Zigzag belt reinforcing structure" means at least two layers of cords or a ribbon of parallel cords having 1 to 20 cords in each ribbon and laid up in an alternating pattern extending at an angle between 5° and 30° between lateral edges of the belt layers as described in EP 2 199 105 A1 or EP 2 199 107 A1 for instance.

### Detailed Description Example Embodiments the Invention

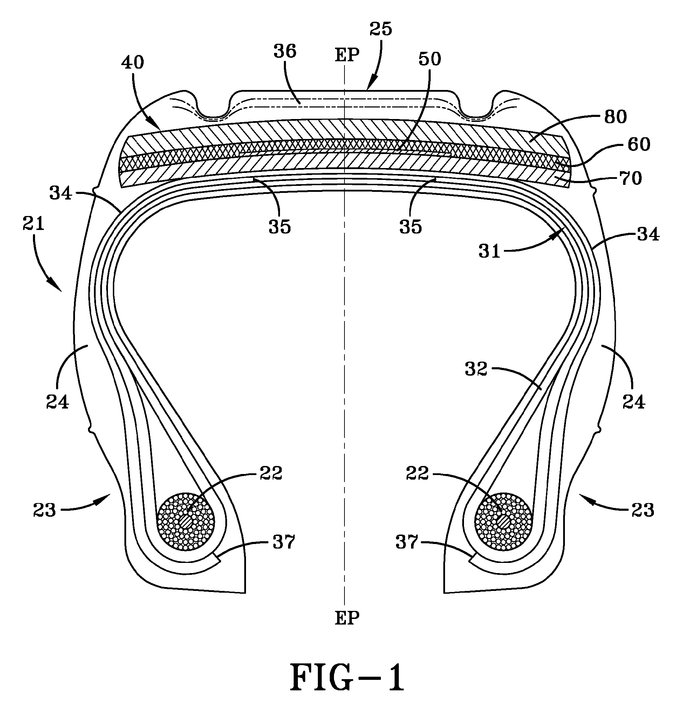

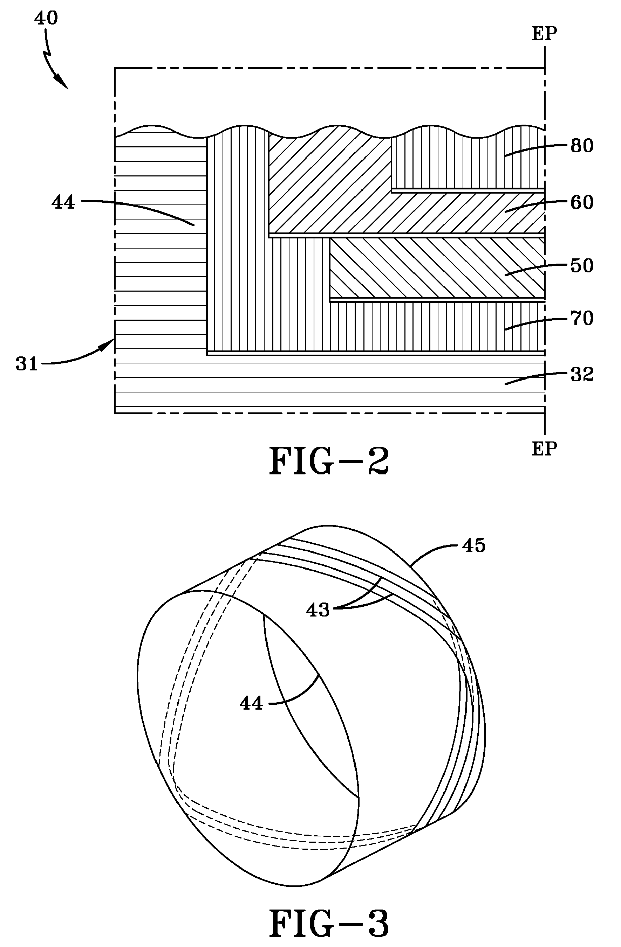

In FIGS. 1 and 2, numeral 21 is a radial tire of the preferred embodiment of the invention, as shown, to be mounted onto an airplane, which comprises a pair of bead portions 23 each containing a bead core 22 embedded therein, a sidewall portion 24 extending substantially outward from each of the bead portions 23 in the radial direction of the tire, and a tread portion 25 of substantially cylindrical shape extending between radially outer ends of these sidewall portions 24. Furthermore, the tire 21 is reinforced with a carcass 31 toroidially extending from one of the bead portions 23 to the other bead portion 23. The carcass 31 preferably comprises at least two carcass plies 32, 34. The first carcass ply 32 extends radially inward of the tread, and wraps around the bead from an axially inward position to an axially outer portion, wherein the turnup ending 35 of the first carcass ply 32 is preferably tucked under the belt 40. A second carcass ply 34, if present, preferably extends radially inward from the tread and axially outward of the bead core 22. The second carcass ply preferably terminates in an ending 37 that does not fully wrap around the bead core 22. Each of these carcass plies 32, 34 may comprise of nylon reinforcement cords, preferably nylon-6,6 cords, preferably extending substantially perpendicular to an equatorial plane E of the tire (i. e. extending in the radial direction of the tire). A tread rubber is arranged on the outside of the carcass 31 in the radial direction.

As shown in FIGS. 1 and 2, a belt 40 is shown arranged between the carcass 31 and the tread rubber. The belt 40 has at least one zigzag belt reinforcing structure 60. The zigzag belt reinforcing structure 60 is formed from at least two layers of cord formed by winding a rubberized strip 43 of two or more cords 46 onto a building drum generally in the circumferential direction while being inclined to extend between side ends or lateral edges 44, 45 of the layer forming a zigzag path, as shown in Figure 3. Thus a zigzag belt structure results in two layers of cord that are interwoven together.

Located radially inward and preferably adjacent the zigzag layer 60 is a contrasting colored wear limit strip 50. The contrasting colored wear limit strip 50 is made of a colored fabric, such as nylon, that has been dyed a bright color. Preferably, the color of the wear limit strip is red or bright color such as yellow, orange, pink etc. The colored wear limit layer may be any desired width, but it is preferably slightly narrower than the first belt layer 60. The colored wear strip 50 may be coated with adhesives known in the art, such as RFL adhesives. The strip 50 may comprise at least two portions along its length having colors different from the black color of the tread rubber. The configuration of the strip 50 is selected to have colors and a length to alert maintenance personnel to the wear level of the tire.

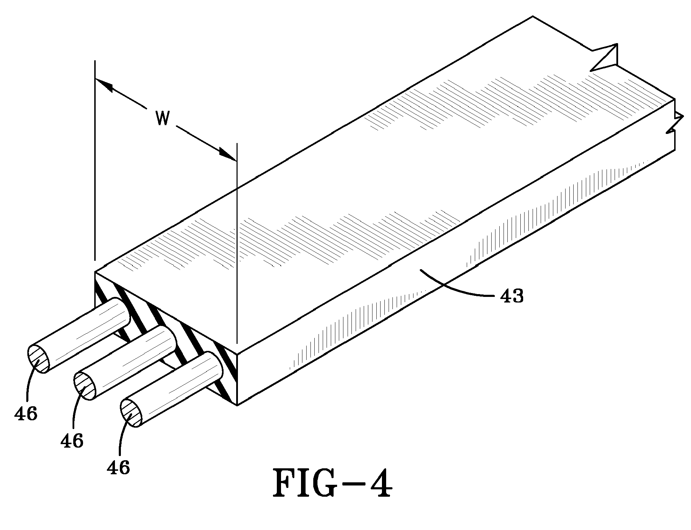

Located radially inward of the colored wear limit strip 50 is a low angle belt layer 70. The low angle belt layer is comprised of at least one low angle belt. The low angle belt has a belt angle of less than 10 degrees as measured with respect to the equatorial plane. Preferably, the low angle belt is formed from spirally wrapping or winding a strip 43 of reinforced ply about the tire building drum. As shown in Figure 4, the strip 43 has at least two parallel reinforcement cords 46 encased in rubber. The second belt layer may preferably comprise at least two low angle spiral layers.

The belt structure 40 may further optionally comprise a low angle belt layer 80 located radially outward of the zigzag layer 60. The low angle belt layer comprises at least one low angle belt, preferably two to three layers. The low angle belt has a belt angle of less than 10 degrees as measured with respect to the equatorial plane. Preferably, the low angle belt is formed from spirally wrapping or winding a strip 43 of reinforced ply about the tire building drum.

In a preferred embodiment, the belt package 40 has three spiral or low angle belt layers, with two zigzag belt structures located radially inward of the three spiral layers. A contrasting color wear strip 50 is located radially inward of the zigzag belt structures. A set of three spirally wound low angle belts are located radially inward of the color wear strip. Thus as the tire wears, the spiral belt layers will be worn through, followed by the zigzag belt layer. The zigzag belt layers act as an early warning because they are visually distinctive from the low angle or spiral belts. As the zigzag belt layer is worn, the contrasting colored wear limit may be seen, indicating that it is time to remove the tire.

The tread wear indicator strip 50 is preferably formed of nylon having colored nylon reinforcements, wherein the color is selected to contrast against black rubber. The tread wear indicator strip 50 is preferably in compliance with military specification Mil-prf-5041K. The color of the nylon is preferably red. Any suitable rubber may be used, and ideally will have a base elastomeric blend similar or highly compatible with the rubber forming the tread. Use of an additional adhesive, such as those used in retreading procedures, may also be used to secure bonding of the tread wear indicator strip in the tire 10. However, the strip may also be formed from other materials that can be placed and held within the tread splice; the primary requirement of such a material being that it be capable of being adhesively bonded to the tread rubber and not destroy the integrity of the tread splice in the cured tire 10.

Rather than having a wear indictor that is only visible once tread wear begins to reach an unacceptable level, the present invention will provide vehicle operators with a visual continual notice as to the level of tread wear of their tires.

## Claims

1. A pneumatic tire comprising a tread (25), a belt structure (40, 50, 60, 70, 80) and a carcass (31), the belt structure comprising a zigzag belt structure (60) and a contrasting colored wear indicator structure (50) located either (i) radially inward of the zigzag belt structure (60); or (ii) radially outward of the zigzag belt structure (60) and between the zigzag belt structure (60) and a belt layer (80).

2. The pneumatic tire of claim 1 comprising a spirally applied layer (80) located radially outward of the zigzag belt structure (60).

3. The pneumatic tire of claim 1 or 2 comprising a spirally applied layer (70) located radially inward of the contrasting colored wear indicator structure (50).

4. The pneumatic tire of at least one of the previous claims wherein the contrasting colored wear indicator structure (50) is made of colored nylon.

5. The pneumatic tire of at least one of the previous claims wherein the contrasting colored wear indicator structure (50) is formed by or comprises a nonblack colored fabric.

6. The pneumatic tire of at least one of the previous claims wherein the contrasting colored wear indicator structure is made of or comprises red colored nylon.

7. The pneumatic tire of at least one of the previous claims comprising at least three spirally applied layers located radially inward of the contrasting colored wear indicator structure (50).

8. The pneumatic tire of at least one of the previous claims comprising at least three spirally applied layers located radially outward of the zigzag belt structure (60).

9. The pneumatic tire of at least one of the previous claims wherein the axial width of contrasting colored wear indicator structure (50) is in a range of from 20 to 80 percent, alternatively 30 to 60 percent, of the axial width of the zigzag belt structure (60).

10. The pneumatic tire of at least one of the previous claims wherein the axial width of contrasting colored wear indicator structure (50) is in a range of from 20 to 80 percent, alternatively 30 to 60 percent, of the zigzag belt structure (60) radially adjacent to and radially above the contrasting colored wear indicator structure (50).

11. The pneumatic tire of at least one of the previous claims wherein the axial width of contrasting colored wear indicator structure (50) is a layer or a strip, preferably a layer or a strip having a thickness in a range of from 0.5 to 2 mm, alternatively 0.75 mm to 1.5 mm.

12. The tire of claim 11 wherein the colored wear indicator structure (50) is a strip comprising at least two portions along its length having colors different from a black color of the tread rubber.

13. The pneumatic tire of at least one of the previous claims wherein the belt layer (80) or the spirally applied layer (80) is a low angle belt layer having a angle belt of less than 10 degrees, preferably less than 5 degrees or less than 2 degrees, as measured with respect to the equatorial plane (EP).

14. The pneumatic tire of at least one of the previous claims wherein the tire is an aircraft tire, preferably a radial aircraft tire.

15. The pneumatic tire of at least one of the previous claims wherein the tire is a truck tire, preferably a radial truck tire.
